# EUROPEAN PATENT APPLICATION

(11) **EP 1 447 932 A1**
(43) Date of publication of application: **18.08.2004**
(21) Application number: 01274764.8
(22) Date of filing: 21.11.2001
(51) Int. Cl.: H04J 13/04, H04Q 7/38

(54) **WIRELESS RECEIVER**

(71) Applicant: MATSUSHITA ELECTRIC INDUSTRIAL CO., LTD., Kadoma-shi, Osaka 571-8501 (JP)
(72) Inventor: MIYOSHI, Kenichi, Yokohama-shi, Kanagawa 236-0058 (JP); AOYAMA, Takahisa, Yokosuka-shi, Kanagawa 233-0007 (JP); UE, Toyoki, Yokosuka-shi, Kanagawa 238-0022 (JP)
(74) Representative: Grünecker, Kinkeldey, Stockmair & Schwanhäusser Anwaltssozietät
(86) International application number: PCT/JP2001/010151
(87) International publication number: WO 2003/044997

(57) **Abstract**

The present invention makes it possible to perform channel estimation and delay profile detection based on not only an dedicated physical channel (DPCH) but also a common channel signal (e.g., downlink shared channel (DSCH)), and can thereby implement a radio reception apparatus capable of performing channel estimation and creation of a delay profile with a high degree of accuracy.

## Description

### Technical Field

The present invention relates to a radio reception apparatus used for a radio communication system based on a CDMA (Code. Division Multiple Access) system, and more particularly, to a radio reception apparatus that carries out channel estimation and creates a delay profile.

### Background Art

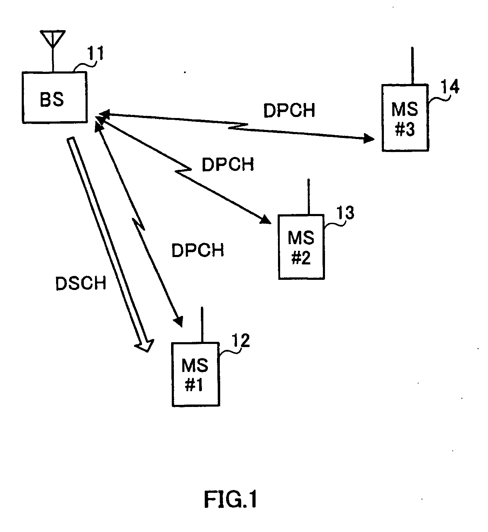

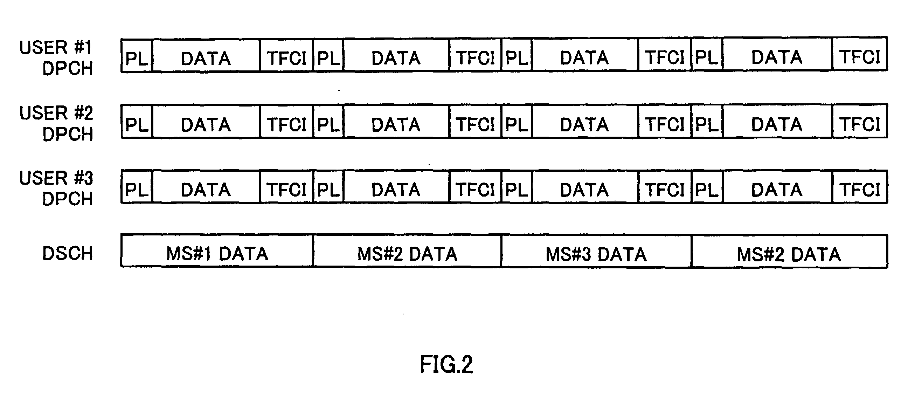

Of a conventional CDMA-based radio communication system, a digital mobile communication will be explained with reference to FIG. 1 and FIG.2. FIG.1 is a schematic view showing an example of a digital mobile communication system. FIG.2 is a schematic view showing an example of channel assignment in a digital mobile communication system.

The example in FIG. 1 shows a case where a base station 11 is carrying out radio communications with three mobile stations (that is, mobile stations 12 to 14). Between the base station 11 and the respective mobile stations, transmission data and control signals are sent using dedicated channels (DPCH: Dedicated Physical Channel) anddownlink shared channels (DSCH), etc., shown in FIG.2.

A DSCH is a channel for sending data (packet) modulated based on a high rate modulation system (e.g., modulation systems such as 64QAM and 16QAM) to each mobile station on a time-division basis, and can switch from one mobile station to another to which data is sent for every frame. A DPCH is a channel for sending data such as speech, known signals (PL) and TFCI (Transmit Format Combination Indicator) to each mobile station simultaneously with DSCH.

For ease of explanation hereafter, a signal sent through a DSCH will be referred to as "DSCH signal" and a signal sent through a DPCH will be referred to as "DPCH signal."

Each mobile station performs the following reception processing. That is, using a TFCI in the DPCH signal the mobile station recognizes to which mobile station the DSCH signal is directed. Furthermore, this mobile station acquires a demodulated signal by despreading the DSCH signal directed to the own station.

However, the DSCH signal which the mobile station receives includes not only a propagation delay but also phase variation and amplitude variation due to fading, etc. (hereinafter simply referred to as "fading variation"). Thus, the mobile station creates a delay profile using known signals extracted from the despread DPCH signal and detects the despreading timing from the created delay profile. The mobile station also carries out channel estimation using the above-described extracted known signals and detects variations in the propagation path including phase variation and amplitude variation based on this channel estimation. The mobile station also despreads the received signal according to the despreading timing detected above, extracts the DSCH signal and compensates for the fading variation of the extracted DSCH signal. This causes the mobile station to obtain a demodulated signal with reduced fading variation.

In a conventional digital mobile communication, there is a demand for the ability to carry out channel estimation and creation of a delay profile with a higher degree of accuracy. That is, because the base station transmits a DSCH signal using a higher rate modulation system than the DPCH signal, when the mobile station carries out channel estimation and creation of a delay profile with a low degree of accuracy, it is impossible to compensate for fading variations of the DSCH signal with a high degree of accuracy and it is further impossible to keep the quality of the demodulated signal at a high level.

For example, when the base station uses QPSK modulation, the mobile station only needs to detect the phase of the received signal correctly to demodulate the received signal accurately. However, when the base station uses QAM modulation, the mobile station needs to detect not only the phase but also the amplitude of the received signal correctly to demodulate the received signal accurately.

For such reasons, the mobile station is expected to improve the accuracy of channel estimation and creation of a delay profile.

### Disclosure of Invention

It is an object of the present invention to provide a radio reception apparatus that carries out channel estimation and creation of a delay profile with a high degree of accuracy.

This object is attained by carrying out channel estimation and creating a delay profile based on not only known signals (pilot signals) included in an dedicated physical channel (DPCH) signal but also a common channel (e.g., downlink shared channel) sent to stations other than the own station.

### Brief Description of Drawings

FIG. 1 is a schematic view showing an example of a digital mobile communication system;
FIG.2 is a schematic view showing an example of channel assignment in a digital mobile communication system;
FIG.3 is a block diagram showing a configuration of a mobile station apparatus provided with a radio reception apparatus according to Embodiment 1 of the present invention;
FIG.4 is a block diagram showing a configuration of a mobile station apparatus provided with a radio reception apparatus according to Embodiment 2 of the present invention;
FIG.5 is a block diagram showing a configuration of a mobile station apparatus provided with a radio reception apparatus according to Embodiment 3 of the present invention;
FIG.6A is a schematic view showing a configuration of signal points in a QPSK modulation system;
FIG.6B is a schematic view showing a configuration of signal points in a 16QAM modulation system; and
FIG.6C is a schematic view showing a configuration of signal points in 64QAM modulation system.

### Best Mode for Carrying out the Invention

With reference now to the attached drawings, embodiments of the present invention will be explained in detail below.

### (Embodiment 1)

Here, a case where a mobile station apparatus provided with a radio reception apparatus according to the following embodiment carries out a radio communication with a base station apparatus according to channel assignment as shown in FIG.2 in a mobile communication system shown in FIG.1 will be explained as an example.

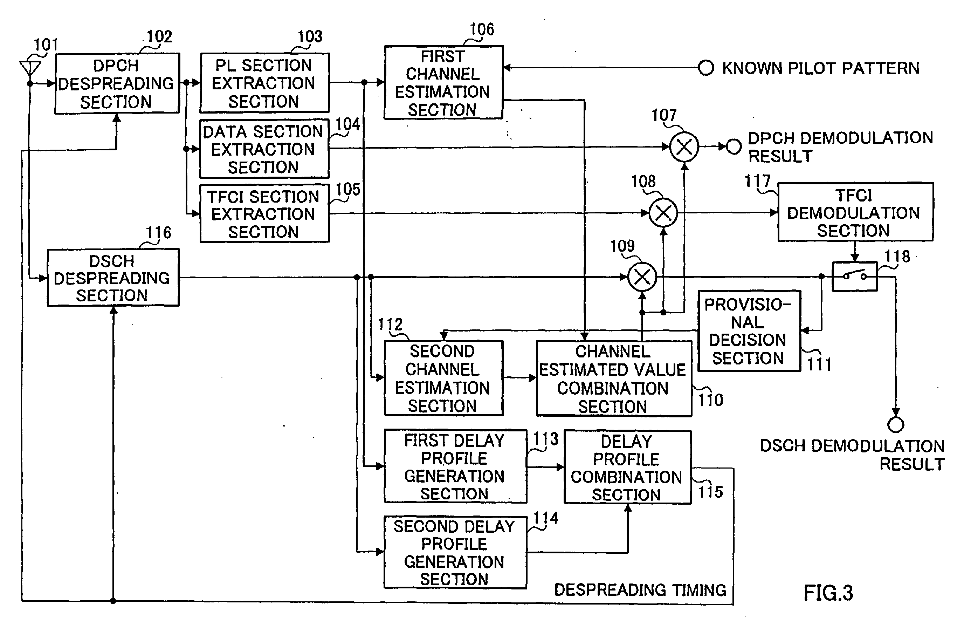

FIG.3 is a block diagram showing a mobile station apparatus provided with a radio reception apparatus according to Embodiment 1 of the present invention. In FIG.3, a DPCH despreading section 102 extracts a DPCH signal by despreading a signal received (received signal) through an antenna 101 at despreading timing from a delay profile combination section 115, which will be described later, using a spreading code assigned to this mobile station apparatus.

A PL section extraction section 103 extracts known signals ("PL" in FIG.2) from the extracted DPCH signal. A data section extraction section 104 extracts data ("Data" in FIG.2) from the extracted DPCH signal. A TFCI section extraction section 105 extracts TFCI ("TFCI" in FIG.2) from the extracted DPCH signal.

ADSCHdespreading section 116 extracts a DSCH signal by despreading the signal received through the antenna 101 at despreading timing from the delay profile combination section 115, which will be described later, using a spreading code assigned to the DSCH.

A first channel estimation section 106 carries out channel estimation using the extracted known signals and known pilot patterns. A multiplication section 107 multiplies a channel estimated value from a channel estimated value combination section 110, which will be described later, by the extracted data. A multiplication section 108 multiplies the channel estimated value from the channel estimated value combination section 110 by the extracted TFCI section. A multiplication section 109 multiplies the extracted DSCH signal by the channel estimated value from the channel estimated value combination section 110.

A provisional decision section 111 makes a provisional decision on the multiplication result of the multiplication section 109. A second channel estimation section 112 carries out channel estimation using the extracted DSCH signal and the provisional decision result. The channel estimated value combination section 110 combines the channel estimated value from the first channel estimation section 106 and a channel estimated value from a second channel estimation section 112.

A TFCI demodulation section 117 demodulates the multiplication result from the multiplication section 108. A switch 118 outputs the multiplication result from the multiplication section 109 as the DSCH demodulation result based on the demodulation result from the demodulation section 117.

A first delayprofile generation section 113 creates a delay profile using the known signals extracted by the PL section extraction section 103. A second delay profile generation section 114 creates a delay profile using the DSCH signal extracted by the DSCH despreading section 116. The delay profile combination section 115 combines the delay profile generated by the first delay profile generation section 113 and the delay profile generated by the second delay profile generation section 114. The delay profile combination section 115 further detects despreading timing using the combined delay profile and sends the detected despreading timing to the above-described DPCH despreading section 102 and DSCH despreading section 116.

Then, the operation of the mobile station apparatus in the above-described configuration will be explained. Here, a case where a DSCH signal corresponding to one frame is demodulated will be explained as an example.

A signal sent from the base station apparatus is received by the antenna 101. The signal received from the antenna 101 is sent to the DPCH despreading section 102 and DSCH despreading section 116.

The DSCH despreading section 116 despreads the received signal from the antenna 101 using a spreading code assigned to the DSCH. A DSCH signal is extracted in this way. The despreading processing at this DSCH despreading section 116 is carried out according to the despreading timing from the delay profile combination section 115. The extracted DSCH signal is sent to the multiplication section 109.

The DPCH despreading section 102 despreads the received signal from the antenna 101 using the spreading code assigned to this mobile station apparatus. A DPCH signal is extracted in this way. The despreading processing at this DPCH despreading section 102 is carried out according to the despreading timing from the delay profile combination section 115. The extracted DPCH signal is sent to the PL section extraction section 103, data section extraction section 104 and TFCI section extraction section 105.

The data section extraction section 104 extracts the data section from the extracted DPCH signal and sends it to the multiplication section 107. The TFCI section extraction section 105 extracts the TFCI section from the extracted DPCH signal and sends it to the multiplication section 108.

The PL section extraction section 103 extracts known signals from the extracted DPCH signal and sends them to the first channel estimation section 106. The first channel estimation section 106 performs channel estimation using the extracted known signals and known pilot patterns. The channel estimation result obtained from the first channel estimation section 106 is sent to the channel estimated value combination section 110.

The channel estimated value combination section 110 combines the channel estimated value from the first channel estimation section 106 and the channel estimated value from the second channel estimation section 112. Since no channel estimated value is being sent from the second channel estimation section 112 at this time point, the channel estimated value from the first channel estimation section 106 is considered to be the channel estimated value after the combination. Then, a complex conjugate of the combined channel estimated value is sent from the channel estimated value combination section 110 to the multiplication section 109.

The multiplication section 109 multiplies the DSCH signal from the DSCH despreading section 116 by the complex conjugate from the channel estimated value combination section 110. This results in a DSCH signal compensated for fading variation. The fading variation compensated here corresponds to the fading variation estimated based on the channel estimated value from the first channel estimation section 106 (that is, channel estimated value only based on known signals of the DPCH signal).

The DSCH signal compensated for fading variation is subjected to a provisional decision by the provisional decision section 111. The DSCH signal after the provisional decision is sent to the second channel estimation section 112.

The second channel estimation section 112 performs channel estimation using the DSCH signal after the provisional decision from the provisional decision section 111 and the DSCH signal from the DSCH despreading section 116. Here, the DSCH signal after the provisional decision is used as if regarded as a known signal. The channel estimated values obtained by the second channel estimation section 112 are sent to the channel estimated value combination section 110.

At the present moment, the channel estimated value from the aforementioned first channel estimation section 106 and the channel estimated value from the second channel estimation section 112 are input to the channel estimated value combination section 110. Thus, the channel estimated value combination section 110 combines the above two channel estimated values. Then, the channel estimated value combination section 110 outputs the complex conjugate of the combined channel estimated value to the multiplication sections 107 to 109.

The multiplication section 107 multiplies the data from the data section extraction section 104 by the complex conjugate from the channel estimated value combination section 110. This results in data compensated for fading variation. This data is output as the DPCH demodulation result. The multiplication section 108 multiplies the TFCI from the TFCI section extraction section 105 by the complex conjugate from the channel estimated value combination section 110. This results in the TFCI compensated for fading variation. The TFCI obtained is sent to the TFCI demodulation section 117.

The TFCI demodulation section 117 demodulates the TFCI from the multiplication section 108 and decides whether the DSCH signal has been sent to the own station or not based on this demodulation result. Furthermore, only when it is decided that the DSCH signal has been sent to the own station, the TFCI demodulation section 117 generates a control signal instructing that the DSCH signal from the multiplication section 109 should be output as the DSCH demodulation result. This control signal is sent to the switch 118 and at the same time sent to the multiplication section 109 through a path which is not shown.

That is, when it is decided that the DSCH signal has been sent to the own station, the multiplication section 109 multiplies the DSCH signal from the DSCH despreading section 116 by the complex conjugate from the channel estimated value combination section 110. This results in the DSCH signal compensated for fading variation. The DSCH signal compensated for fading variation is output as the DSCH demodulation result through the switch 118.

At this time, the fading variation compensated at the multiplication section 107, multiplication section 108 and multiplication section 109 corresponds to the fading variation estimated with the channel estimated value from the channel estimated value combination section 110 (that is, the known signals of the DSCH signal and channel estimated value by the DPCH signal).

On the other hand, despreading timings at the DPCH despreading section 102 and DSCH despreading section 116 are detected simultaneously with the above-described channel estimation as follows. First, the known signals extracted from the PL section extraction section 103 are sent to the first delay profile generation section 113. The DSCH signal extracted from the DSCH despreading section 116 is sent to the second delay profile generation section 114.

The first delay profile generation section 113 creates a delay profile using the above-described known signals. The delay profile generated is sent to the delay profile combination section 115. The second delay profile generation section 114 creates a delay profile using the above-described DSCH signal. The delay profile generated is sent to the delay profile combination section 115.

The delay profile combination section 115 combines the delay profiles generated by the first delay profile generation section 113 and second delay profile generation section 114. Furthermore, a peak of the magnitude of the combined delay profile is detected as despreading timing. The detected despreading timing is sent to the above-described DPCH despreading section 102 and DSCH despreading section 116.

Then, the effect of the mobile station apparatus in the above-described configuration will be explained focused on channel estimation and creation of a delay profile. First, the effect in channel estimation will be explained. While the conventional system performs channel estimation using known signals inserted in a one-frame DPCH signal as shown in FIG.2, this embodiment performs channel estimation using a DSCH signal in addition to channel estimation similar to that of the conventional system. That is, this embodiment drastically increases the amount of data used for channel estimation compared to the conventional system. This results in channel estimation with a high degree of accuracy.

Furthermore, when the cycle of fading variation is shorter than a cycle corresponding to one frame, the conventional system deteriorates the accuracy of channel estimation, but this embodiment performs channel estimation using not only the known signals inserted in the DPCH signal but also DSCH signal corresponding to one frame, and can thereby maintain the accuracy of channel estimation at a high level.

Then, the effect in the creation of a delay profile will be explained. While the conventional system performs channel estimation using known signals inserted in a one-frame DPCH signal as shown in FIG.2, this embodiment creates a delay profile using a DSCH signal in addition to creation of a delay profile similar to that of the conventional system. That is, this embodiment drastically increases the amount of data used for creation of a delay profile compared to the conventional system. This results in detection of despreading timing with a high degree of accuracy.

Thus, this embodiment performs channel estimation and creation of a delay profile (detection of despreading timing) using not only the DSCH signal sent to the own station but also DSCH signals sent to other stations, and can thereby extract a demodulated signal with a high degree of accuracy using not only a normal DPCH signal but also DSCH signals sent using a high rate modulation system.

This embodiment has described the case where channel estimation and creation of a delay profile are performed simultaneously using known signals of a DPCH signal and DSCH signal as an example of obtaining a maximum effect, but it goes without saying that this embodiment can also extract demodulated signals with a higher degree of accuracy than the conventional system when either one of the above-described channel estimation or creation of a delay profile is applied separately.

Furthermore, this embodiment has described the case where the base station apparatus uses DPCH to send data (speech, etc.) and various known signals to each mobile station apparatus through different channels and the base station apparatus uses DSCH to send data (packet, etc.) to each mobile station apparatus through the same channel. However, this embodiment is not limited to DSCH and the important point here is that it is possible to attain similar effects as those of the above-described embodiment if channel estimation and creation of a delay profile are performed based on a common channel signal which is possible to be sent to stations other than the own station. This will also apply to the following embodiments in the same way.

### (Embodiment 2)

This embodiment will describe a case where of the DSCH signals received in Embodiment 1 only signals exceeding a predetermined threshold are used for channel estimation and creation of a delay profile.

The above-described Embodiment 1 uses all the received DSCH signals for channel estimation and creation of a delay profile. However, the received DSCH signals include signals with reduced power due to influences of fading. A provisional decision result of such DSCH signals with reduced reception power is likely to include errors. Performing channel estimation and creation of a delay profile using such DSCH signals will result in deteriorated accuracy of the demodulated signal extracted.

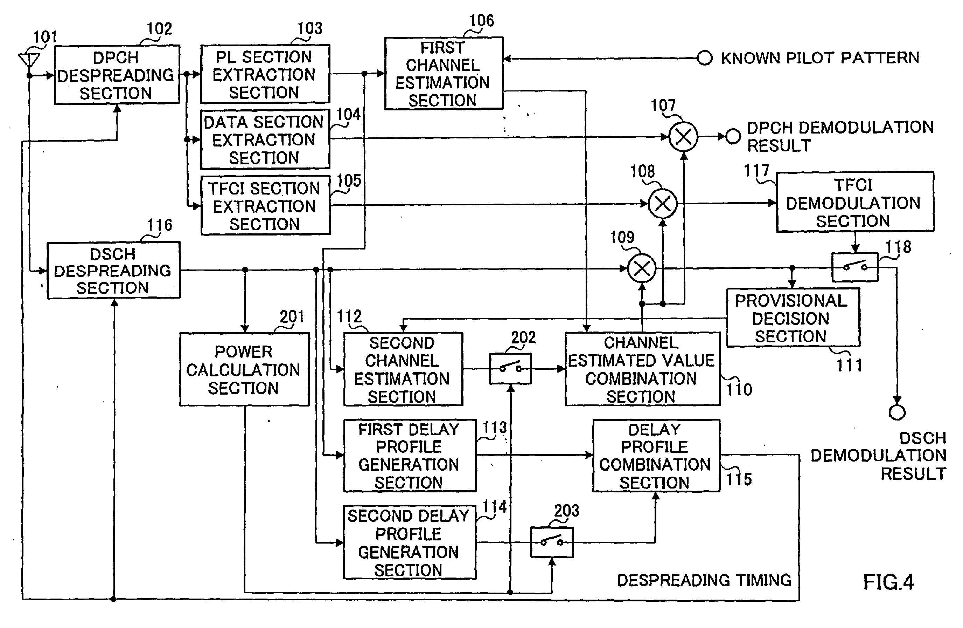

Thus, this embodiment uses only signals exceeding a predetermined threshold out of the received DSCH signals for channel estimation and creation of a delay profile. Such a radio reception apparatus according to this embodiment will be explained with reference to FIG.4 below.

FIG.4 is a block diagram showing a configuration of a mobile station apparatus provided with a radio reception apparatus according to Embodiment 2 of the present invention. In FIG. 4, the same components as those in Embodiment 1 (FIG.3) are assigned the same reference numerals as those in FIG.3 and detailed explanations thereof will be omitted.

In FIG. 4, a power calculation section 201 calculates reception power (electric power) of a DSCH signal from a DSCH despreading section 116 and compares the calculated reception power with a predetermined threshold. This power calculation section 201 controls a switch 202 and switch 203, which will be described later, based on the comparison result. That is, when the calculated reception power is greater than the threshold, the power calculation section 201 controls the switch 202 so that a channel estimated value from a second channel estimation section 112 is output to a channel estimated value combination section 110 and at the same time controls the switch 203 so that a delay profile from a second delay profile generation section 114 is output to a delay profile combination section 115. On the contrary, when the calculated reception power is equal to or lower than the threshold, the power calculation section 201 controls the switch 202 so that a channel estimated value from the second channel estimation section 112 is not output to the channel estimated value combination section 110 and at the same time controls the switch 203 so that the delay profile from the second delay profile generation section 114 is not output to the delay profile combination section 115.

The switch 202 and switch 203 switch between outputs of the channel estimated values and delay profiles respectively based on the control of the above-described power calculation section 201.

Thus, this embodiment uses only signals of the received DSCH signals whose reception power exceeds a predetermined threshold for channel estimation and creation of a delay profile, and can thereby extract a demodulated signal with a high degree of accuracy even when reception power of DSCH is likely to reduce due to influences of fading.

### (Embodiment 3)

This embodiment will describe a case where of the received DSCH signals in Embodiment 1, only the DSCH signals based on a modulation system with a small multi-value number of modulation, with reception power exceeding a predetermined threshold are used for channel estimation and creation of a delay profile.

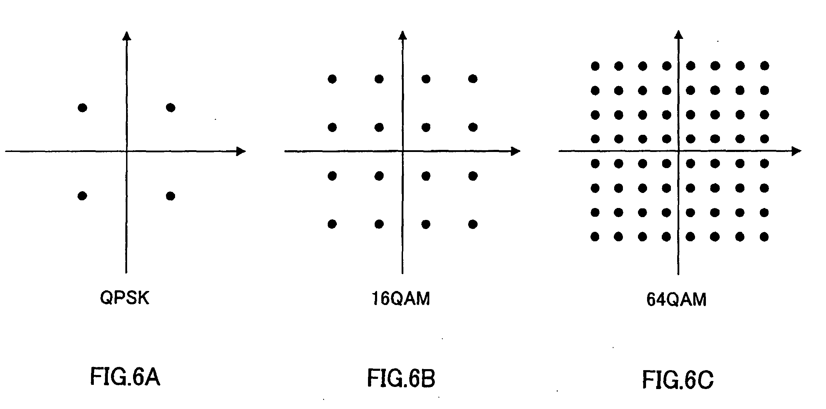

Generally, a base station apparatus sends high rate data using a QPSK system (see FIG. 6A), 16QAM system (see FIG. 6B), and 64QAM system (see FIG. 6C) as DSCH signals. A mobile station apparatus cannot make a correct provisional decision for DSCH signals using 16QAM system and 64QAM system under conditions of receiving DSCH signals with the same average reception power unless amplitude information is detected accurately, whereas the mobile station apparatus can make a correct provisional decision for a DSCH signal using a QPSK system if only phase information is detected accurately.

Thus, to perform channel estimation and creation of a delay profile more accurately, this embodiment only uses the DSCH signals based on a modulation system with a small multi-value number of modulation, with reception power exceeding a predetermined threshold for channel estimation and creation of a delay profile. This makes it possible to perform channel estimation and creation of a delay profile with a high degree of accuracy.

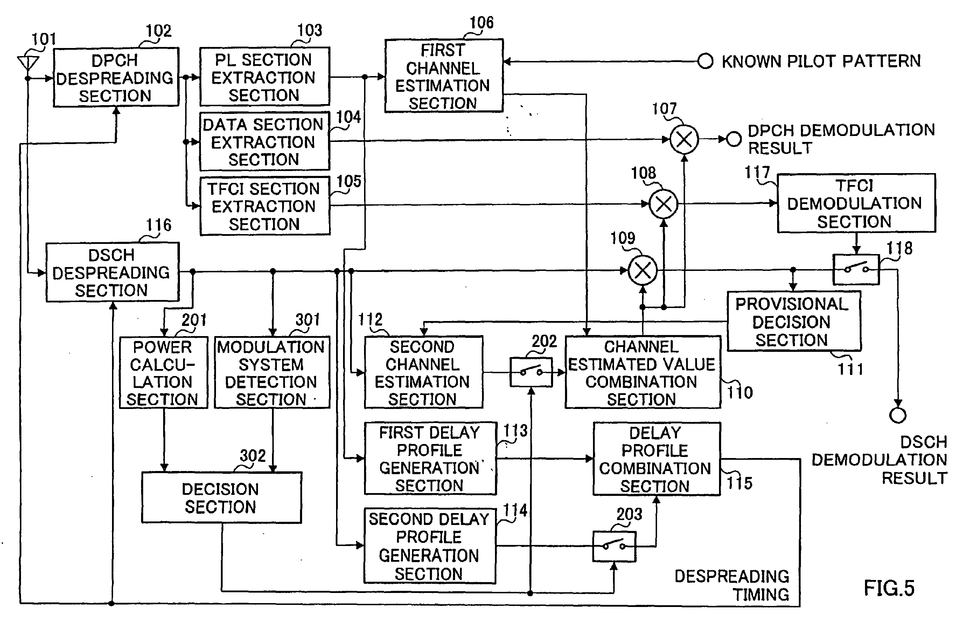

The radio reception apparatus according to this embodiment will be explained with reference to FIG.5. FIG.5 is a block diagram showing a configuration of a mobile station apparatus provided with a radio reception apparatus according to Embodiment 3 of the present invention. In FIG.5, the same components as those of Embodiment 1 (FIG.3) are assigned the same reference numerals as those in FIG.3 and detailed explanations thereof can be omitted.

In FIG.5, as in the case of Embodiment 2, a power calculation section 201 calculates reception power of a DSCH signal from a DSCH despreading section 116 and compares the calculated reception power with a predetermined threshold. This power calculation section 201 outputs the comparison result to a decision section 302. A modulation system detection section 301 detects a modulation system used for the DSCH signal from the DSCH despreading section 116 used for DSCH signals and outputs the detection result to a decision section 302.

The decision section 302 controls a switch 202 and switch 203 based on the comparison result from the power calculation section 201 and the detection result from the modulation system detection section 301. That is, the decision section 302 controls the switch 202 and switch 203 so that the reception power exceeds a predetermined threshold and only DSCH signals using a high reliability modulation system (that is, modulation system with a smaller multi-value number of modulation (e.g., QPSK system)) are used for channel estimation and creation of a delay profile. In other words, the decision section 302 controls the switch 202 and switch 203 so that only DSCH signals that can be provisionally decided more accurately are used for channel estimation and creation of a delay profile. More specific operations of the switch 202 and switch 203 are the same as those explained in Embodiment 2.

Thus, of the received DSCH signal, this embodiment only uses DSCH signals using a modulation system with a smaller multi-value number of modulation and with reception power exceeding a predetermined threshold for channel estimation and creation of a delay profile, and can thereby extract a demodulated signal more accurately.

This embodiment has described the case where the modulation system is detected using the extracted DSCH signals as an example, but when information for notifying the modulation system to the TFCI, it is possible to detect a modulation system using the TFCI demodulation result.

Furthermore, the present invention is not limited to the above-described embodiment, but can be implemented modified in various ways.

The radio reception apparatus of the present invention adopts a configuration including a despreading section that despreads a common channel signal, a channel estimation section that calculates a channel estimated value based on the despread common channel signal and a demodulation section that compensates the despread signal for the propagation path based on the channel estimated value obtained and demodulates the received signal.

This configuration calculates a channel estimated value using a common channel signal with a large amount of data, and can thereby perform channel estimation with a high degree of accuracy. As a result, it is possible to compensate the received signal for the propagation path with a high degree of accuracy and obtain a demodulated signal of high quality.

Furthermore, the radio reception apparatus of the present invention adopts a configuration including a despreading section that despreads a common channel signal and a delay profile generation section that generates a delay profile based on the despread signal, wherein the despreading section performs despreading processing at timing based on the delay profile.

This configuration creates a delay profile using a common channel signal with a large amount of data, and can thereby create a delay profile with a high degree of accuracy. This makes it possible to perform despreading processing at despreading timing with a high degree of accuracy and thereby obtain a demodulated signal of high quality.

Furthermore, the radio reception apparatus of the present invention adopts a configuration further including a provisional decision section that makes a provisional decision on the common channel signal after the propagation path compensation, wherein the channel estimation section calculates a channel estimated value by regarding the provisional decision result as a known signal and comparing it with the signal before the propagation path compensation.

This configuration makes it easier to calculate a channel estimated value.

Furthermore, the radio reception apparatus of the present invention adopts a configuration including a despreading section that despreads an dedicated physical channel signal directed to the own station and a common channel signal, a first channel estimation section that calculates a first channel estimated value based on the despread dedicated physical channel signal, a second channel estimation section that calculates a second channel estimated value based on the despread common channel signal, a combination section that calculates a combined channel estimated value that combines the first and second channel estimated values and a demodulation section that compensates the despread dedicated physical channel signal and common channel signal for the propagation path based on the combined channel value and demodulates the signals.

According to this configuration, the combined channel estimated value is calculated using dedicated physical channel signals and common channel signals, and therefore it becomes a channel estimated value with quite a high degree of accuracy based on quite a large amount of data. As a result, it is possible to compensate the received signal for the propagation path with a high degree of accuracy and obtain a demodulated signal of high quality.

Furthermore, the radio reception apparatus of the present invention adopts a configuration including a despreading section that despreads an dedicated physical channel signal directed to the own station and a common channel signal, a first delay profile generation section that generates a first delay profile based on the despread dedicated physical channel signal, a second delay profile generation section that generates a second delay profile based on the despread common channel signal, a combination section that calculates a combined delay profile that combines the first and second delay profiles, wherein the despreading section is constructed in such a way as to carry out despreading processing at timing based on the combined delay profile.

According to this configuration, the combined delay profile is created using dedicated physical channel signals and common channel signal, and therefore it becomes a delayprofilewithquite a high degree of accuracy based on quite a large amount of data. As a result, it is possible to perform despreading processing at despreading timing with a high degree of accuracy and thereby obtain a demodulated signal of high quality.

Furthermore, the radio reception apparatus of the present invention further includes a provisional decision section that makes a provisional decision on the common channel signal after propagation path compensation, wherein the second channel estimation section is constructed in such a way as to calculate a second channel estimated value by regarding the provisional decision result as a known signal and comparing it with the signal before the propagation path compensation.

This configuration makes it possible to easily calculate the second channel estimated value.

Furthermore, the radio reception apparatus according to the present invention further includes a reliability detection section that detects reliability of a despread common channel signal, wherein when the reliability exceeds a predetermined threshold, the combination section calculates a combined channel estimated value by combining the first and second channel estimated values and when the reliability is equal to or less than the predetermined threshold, the combination section adopts a configuration designating the first channel estimated value as the combined channel estimated value.

According to this configuration, if, for example, the reliability of the received common channel signal is low due to influences of fading, using the common channel signal for channel estimation may further deteriorate the accuracy of the channel estimated value, and therefore considering such a possibility, this embodiment performs channel estimation only using dedicated physical channels, and can thereby perform optimum channel estimation according to the propagation path condition.

Furthermore, the radio reception apparatus of the present invention further includes a reliability detection section that detects the reliability of a despread common channel signal, wherein when the reliability exceeds a predetermined threshold, the combination section combines the first and second delay profiles to obtain a combined delay profile and when the reliability is equal to or less than the predetermined threshold, the combination section adopts a configuration designating the first delay profile as the combined delay profile.

According to this configuration, if, for example, the reliability of the received common channel signal is low due to influences of fading, using the common channel signal for the setting of despreading timing may further deteriorate the accuracy of the despreading timing, and therefore considering such apossibility, this embodiment determines the despreading timing only using dedicated physical channels, and can thereby determine optimum despreading timing according to the propagation path condition.

Furthermore, the communication terminal apparatus of the present invention is a communication terminal apparatus provided with a radio reception apparatus and the radio reception apparatus adopts a configuration including a despreading section that despreads a common channel signal, a channel estimation section that calculates a channel estimated value based on the despread common channel signal and a demodulation section that compensates the despread signal for the propagation path based on the channel estimated value obtained and demodulates the received signal.

This configuration makes it possible to compensate for the propagation path with a high degree of accuracy based on a channel estimated value with a high degree of accuracy and thereby implement a communication terminal apparatus capable of obtaining a demodulated signal of high quality.

Furthermore, the communication terminal apparatus of the present invention is a communication terminal apparatus provided with a radio reception apparatus and the radio reception apparatus adopts a configuration including a despreading section that despreads a common channel signal and a delay profile generation section that generates a delay profile based on the despread signal, wherein the despreading section performs despreading processing at timing based on the delay profile.

This configuration makes it possible to perform despreading processing at despreading timing with a high degree of accuracy based on the delay profile with a high degree of accuracy and thereby obtain a demodulated signal of high quality.

As described above, the present invention allows channel estimation and creation of a delay profile to be performed based on a common channel signal, and can thereby implement a radio reception apparatus capable of performing channel estimation and creation of a delay profile with a high degree of accuracy.

This application is based on the Japanese Patent Application No. 2000-155372 filed on May 25, 2000, entire content of which is expressly incorporated by reference herein.

### Industrial Applicability

Of radio reception apparatuses used for a CDMA-based radio communication system, the present invention is applicable to a radio reception apparatus that performs channel estimation and creation of a delay profile.

## Claims

1. A radio reception apparatus comprising:
a despreading section that despreads a common channel signal;
a channel estimation section that calculates a channel estimated value based on the despread common channel signal; and
a demodulation section that compensates the despread signal for the propagation path based on the channel estimated value obtained and demodulates the received signal.

2. A radio reception apparatus comprising:
a despreading section that despreads a common channel signal; and
a delay profile generation section that generates a delay profile based on the despread signal, wherein said despreading section performs despreading processing at timing based on said delay profile.

3. The radio reception apparatus according to claim 1, further comprising a provisional decision section that makes a provisional decision on the common channel signal after the propagation path compensation, wherein the channel estimation section calculates a channel estimated value by regarding said provisional decision result as a known signal and comparing the known signal with the signal before the propagation path compensation.

4. The radio reception apparatus according to claim 1, wherein the common channel signal is a downlink shared channel signal.

5. The radio reception apparatus according to claim 2, wherein the common channel signal is a downlink shared channel signal.

6. The radio reception apparatus according to claim 1, further comprising a delay profile generation section that generates a delay profile based on the despread signal, wherein the despreading section performs despreading processing at timing based on said delay profile.

7. A radio reception apparatus comprising:
a despreading section that despreads an dedicated physical channel signal directed to the own station and common channel signal;
a first channel estimation section that calculates a first channel estimated value based on the despread dedicated physical channel signal;
a second channel estimation section that calculates a second channel estimated value based on the despread common channel signal;
a combination section that calculates a combined channel estimated value that combines said first and second channel estimated values; and
a demodulation section that compensates said despread dedicated physical channel signal and common channel signal for the propagation path based on said combined channel value and demodulates the signals.

8. A radio reception apparatus comprising:
a despreading section that despreads an dedicated physical channel signal directed to the own station and common channel signal;
a first delay profile generation section that generates a first delay profile based on the despread dedicated physical channel signal;
a second delay profile generation section that generates a second delay profile based on the despread common channel signal;
a combination section that calculates a combined delay profile that combines said first and second delay profiles, wherein said despreading section carries out despreading processing at timing based on said combined delay profile.

9. The radio reception apparatus according to claim 7, further comprising:
a first delay profile generation section that generates a first delay profile based on the despread dedicated physical channel signal;
a second delay profile generation section that generates a second delay profile based on the despread common channel signal;
a combination section that calculates a combined delay profile that combines the first and second delay profiles, wherein the despreading section carries out despreading processing at timing based on the combined delay profile.

10. The radio reception apparatus according to claim 7, further comprising:
a provisional decision section that makes a provisional decision on said common channel signal after propagation path compensation, wherein the second channel estimation section calculates a second channel estimated value by regarding said provisional decision result as a known signal and comparing the provisional decision result with the signal before the propagation path compensation.

11. The radio reception apparatus according to claim 7, further comprising:
a reliability detection section that detects reliability of a despread common channel signal, wherein when said reliability exceeds a predetermined threshold, the combination section calculates a combined channel estimated value by combining the first and second channel estimated values and when said reliability is equal to or less than the predetermined threshold, the combination section designates the first channel estimated value as the combined channel estimated value.

12. The radio reception apparatus according to claim 8, further comprising:
a reliability detection section that detects the reliability of a despread common channel signal, wherein when said reliability exceeds a predetermined threshold, the combination section combines the first and second delay profiles to obtain a combined delay profile and when said reliability is equal to or less than the predetermined threshold, the combination section designates the first delay profile as the combined delay profile.

13. The radio reception apparatus according to claim 11, wherein the reliability detection section detects the reliability based on the power of the despread common channel signal.

14. The radio reception apparatus according to claim 12, wherein the reliability detection section detects the reliability based on the power of the despread common channel signal.

15. The radio reception apparatus according to claim 11, wherein the reliability detection section detects the reliability based on the modulation system of the common channel signal.

16. The radio reception apparatus according to claim 12, wherein the reliability detection section detects the reliability based on the modulation system of the common channel signal.

17. A communication terminal apparatus provided with a radioreceptionapparatus,saidradioreception apparatus comprising:
a despreading section that despreads a common channel signal;
a channel estimation section that calculates a channel estimated value based on the despread common channel signal; and
a demodulation section that compensates the despread signal for the propagation path based on the channel estimated value obtained and demodulates the received signal.

18. A communication terminal apparatus provided with a radio reception apparatus, said radio reception apparatus comprising:
a despreading section that despreads a common channel signal; and
a delay profile generation section that generates a delay profile based on the despread signal, wherein said despreading section performs despreading processing at timing based on said delay profile.

19. The radio reception apparatus according to claim 17, wherein the common channel signal is a downlink shared channel signal.

20. The radio reception apparatus according to claim 18, wherein the common channel signal is a downlink shared channel signal.

## Amended claims

### Amended claims under Art. 19.1 PCT

**1.** (Deleted)

**2.** (Deleted)

**3.** (Deleted)

**4.** (Deleted)

**5.** (Deleted)

**6.** (Deleted)

**7.** A radio reception apparatus comprising:
a despreading section that despreads an dedicated physical channel signal directed to the own station and common channel signal;
a first channel estimation section that calculates a first channel estimated value based on the despread dedicated physical channel signal;
a second channel estimation section that calculates a second channel estimated value based on the despread common channel signal;
a combination section that calculates a combined channel estimated value that combines said first and second channel estimated values; and
a demodulation section that compensates said despread dedicated physical channel signal and common channel signal for the propagation path based on said combined channel value and demodulates the signals.

**8.** A radio reception apparatus comprising:
a despreading section that despreads an dedicated physical channel signal directed to the own station and common channel signal;
a first delay profile generation section that generates a first delay profile based on the despread dedicated physical channel signal;
a second delay profile generation section that generates a second delay profile based on the despread common channel signal;
a combination section that calculates a combined delay profile that combines said first and second delay profiles, wherein said despreading section carries out despreading processing at timing based on said combined delay profile.

**9.** The radio reception apparatus according to claim 7, further comprising:
a first delay profile generation section that generates a first delay profile based on the despread dedicated physical channel signal;
a second delay profile generation section that generates a second delay profile based on the despread common channel signal;
a combination section that calculates a combined delay profile that combines the first and second delay profiles, wherein the despreading section carries out despreading processing at timing, based on the combined delay profile.

**10.** The radio reception apparatus according to claim 7, further comprising:
a provisional decision section that makes a provisional decision on said common channel signal after propagation path compensation, wherein the second channel estimation section calculates a second channel estimated value by regarding said provisional decision result as a known signal and comparing the provisional decision result with the signal before the propagation path compensation.

**11.** The radio reception apparatus according to claim 7, further comprising:
a reliability detection section that detects reliability of a despread common channel signal, wherein when said reliability exceeds a predetermined threshold, the combination section calculates a combined channel estimated value by combining the first and second channel estimated values and when said reliability is equal to or less than the predetermined threshold, the combination section designates the first channel estimated value as the combined channel estimated value.

**12.** The radio reception apparatus according to claim 8, further comprising:
a reliability detection section that detects the reliability of a despread common channel signal, wherein when said reliability exceeds a predetermined threshold, the combination section combines the first and second delay profiles to obtain a combined delay profile and when said reliability is equal to or less than the predetermined threshold, the combination section designates the first delay profile as the combined delay profile.

**13.** The radio reception apparatus according to claim 11, wherein the reliability detection section detects the reliability based on the power of the despread common channel signal.

**14.** The radio reception apparatus according to claim 12, wherein the reliability detection section detects the reliability based on the power of the despread common channel signal.

**15.** The radio reception apparatus according to claim 11, wherein the reliability detection section detects the reliability based on the modulation system of the common channel signal.

**16.** The radio reception apparatus according to claim 12, wherein the reliability detection section detects the reliability based on the modulation system of the common channel signal.

**17.** (Amended) A communication terminal apparatus provided with a radio reception apparatus, said radio reception apparatus comprising:
a despreading section that despreads an dedicated physical channel signal directed to the own station and a common channel signal;
a first channel estimation section that calculates a first channel estimated value based on the despread dedicated physical channel signal;
a second channel estimation section that calculates a second channel estimated value based on the despread common channel signal;
a combination section that calculates a combined channel estimated value that combines said first and second channel estimated values; and
a demodulation section that compensates said despread dedicated physical signal and common signal for the propagation path based on said combined channel value and demodulates the signals.

**18.** (Amended) A communication terminal apparatus provided with a radio reception apparatus, said radio reception apparatus comprising:
a despreading section that despreads an dedicated physical channel signal directed to the own station and a common channel signal; and
a first delay profile generation section that generates a first delay profile based on the despread dedicated physical channel signal;
a second delay profile generation section that generates a second delay profile based on the despread common channel signal; and
a combination section that calculates a combined delay profile that combines said first and second delay profiles, wherein said despreading section performs despreading processing at timing based on said combined delay profile.

**19.** The radio reception apparatus according to claim 17, wherein the common channel signal is a downlink shared channel signal.

**20.** The radio reception apparatus according to claim 18, wherein the common channel signal is a downlink shared channel signal.
